# EUROPÄISCHE PATENTANMELDUNG

(11) **EP 4 249 238 A1**
(43) Veröffentlichungstag der Anmeldung: **27.09.2023**
(21) Anmeldenummer: 22163468.6
(22) Anmeldetag: 22.03.2022
(51) Int. Cl.: B32B 17/10, B32B 7/12, B32B 37/18, B32B 37/12, B32B 37/10, B32B 37/08, B32B 37/06

(54) **VERFAHREN SOWIE VORRICHTUNG ZUM HERSTELLEN VON VERBUNDSICHERHEITSGLAS**

(71) Anmelder: Fotoverbundglas Marl GmbH, 45772 Marl (DE)
(72) Erfinder: Muschiol, Michael, 45770 Marl (DE)
(74) Vertreter: Kalkoff & Partner Patentanwälte mbB

(57) **Zusammenfassung**

Die Erfindung betrifft ein Verfahren sowie eine Vorrichtung zum Herstellen von Verbundsicherheitsglas aus mindestens einer Vakuumglasscheibe und einer weiteren Glasscheibe mit einer zwischen den Glasscheiben angeordneten Klebeschicht mit einer Grundplatte und einer Abdeckplatte, die relativ zueinander zwischen einer Betriebsposition und einer Entnahmeposition verstellbar sind, einem in der Betriebsposition an der Grundplatte und der Abdeckplatte druckdicht angeordneten Dichtungsrahmen, Mitteln zum Herstellen eines Unterdrucks in einem Hohlraum zwischen einem die Glasscheiben in der Betriebsposition überdeckenden Hüllmaterial und der Grundplatte, Mitteln zur Erzeugung eines Überdrucks in dem in der Betriebsposition zwischen der Abdeckplatte und dem auf den Glasscheiben angeordneten Hüllmaterial gebildeten Arbeitsraum und einer Temperierungseinheit zum Erhitzen der zu verbindenden Glasscheiben. Um eine Vorrichtung sowie ein Verfahren bereitzustellen, welches die Herstellung eines Verbundsicherheitsglases aus mindestens einer Vakuumglasscheibe und einer weiteren Glasscheibe, bspw. einer Flachglasscheibe, ermöglicht, ist vorgesehen, dass bei der Vorrichtung zum Herstellen von Verbundsicherheitsglas die Temperierungseinheit zur individuellen, insbesondere übereinstimmenden Temperierung der zu verbindenden Glasscheiben ausgebildet ist.

## Beschreibung

Die Erfindung betrifft ein Verfahren sowie eine Vorrichtung zum Herstellen von Verbundsicherheitsglas aus mindestens einer Vakuumglasscheibe und einer weiteren Glasscheibe mit einer zwischen den Glasscheiben angeordneten Klebeschicht, mit
- einer Grundplatte und einer Abdeckplatte, die relativ zueinander zwischen einer Betriebsposition und einer Entnahmeposition verstellbar sind,
- einem in der Betriebsposition an der Grundplatte und der Abdeckplatte druckdicht angeordneten Dichtungsrahmen,
- Mitteln zum Herstellen eines Unterdrucks in einem Hohlraum zwischen einem die Glasscheiben in der Betriebsposition überdeckenden Hüllmaterial und der Grundplatte,
- Mitteln zur Erzeugung eines Überdrucks in dem in der Betriebsposition zwischen der Abdeckplatte und dem auf den Glasscheiben angeordneten Hüllmaterial gebildeten Arbeitsraum und
- einer Temperierungseinheit zum Erhitzen der zu verbindenden Glasscheiben.

Verbundsicherheitsglasscheiben sind in vielfältigen Ausgestaltungen aus dem Stand der Technik bekannt und weisen in der Regel mindestens zwei Glasscheiben auf, welche über eine zwischen den Glasscheiben angeordnete Klebeschicht, die vorzugsweise durch eine Folie aus Polyvinylbutyral (PVB) gebildet ist, miteinander verbunden sind. Derartige Verbundsicherheitsglasscheiben, wie sie bspw. im Kraftfahrzeug- oder Baubereich eingesetzt werden, weisen jedoch eine geringe Isolierungseigenschaft auf, bzw. es müssen sehr dicke Scheiben hergestellt werden, um gewünschte Isolierungseigenschaften zu erreichen. Vakuumglasscheiben weisen einen speziellen Aufbau auf, der darin besteht, dass zwei Glasscheiben, bspw. zwei Flachglasscheiben oder Einscheibensicherheitsglasscheiben, mit einem Zwischenraum über einen Randverbund derart miteinander verbunden sind, dass zwischen den Glasscheiben ein absolutes Vakuum herrscht. Dieses Vakuum verfügt über eine deutlich geringere Wärmeleitfähigkeit als die gewöhnliche Außenluft, so dass für Vakuumglasscheiben Wärmedurchgangswerte erreicht werden können, wie sie sonst nur mit sehr dicken Isolierverglasungen erreicht werden konnten.

Die Herstellung von Verbundsicherheitsglas unter Verwendung mindestens einer Vakuumglasscheibe durch Verbinden mit mindestens einer weiteren Glasscheibe, bspw. einer Glasscheibe aus Flachglas, ist jedoch aufgrund der schlechten Wärmeleitung des Vakuumglases und des recht fragilen Aufbaus des Vakuumglases mit dem zwischen den Glasscheiben bestehenden Zwischenräumen mit herkömmlichen Vorrichtungen und Verfahren zur Herstellung von Verbundsicherheitsglas nicht möglich. Durch die bei den bekannten Verfahren und Vorrichtungen teilweise zur Anwendung kommenden hohen Drücken in den Autoklaven von 10-14 bar, kommt es aufgrund des Aufbaus des Vakuumglases zu einem Versagen in der Fläche. Auch bekannte Vorrichtungen und Verfahren, welche mit geringeren Drücken arbeiten, führen während des Prozesses zu einem Versagen der Gläser im Bereich des Randverbunds.

Hiervon ausgehend liegt der Erfindung die Aufgabe zugrunde, eine Vorrichtung sowie ein Verfahren bereitzustellen, welches die Herstellung eines Verbundsicherheitsglases aus mindestens einer Vakuumglasscheibe und einer weiteren Glasscheibe, bspw. einer Flachglasscheibe, ermöglicht.

Die Erfindung löst die Aufgabe durch eine Vorrichtung mit den Merkmalen des Anspruchs 1 sowie durch ein Verfahren mit den Merkmalen des Anspruchs 13. Vorteilhafte Weiterbildungen der Vorrichtung sind in den abhängigen Ansprüchen 2-12 dargestellt. Weiterbildungen des erfindungsgemäßen Verfahrens sind in den abhängigen Ansprüchen 14-18 angeführt.

Kennzeichnend für die erfindungsgemäße Vorrichtung zum Herstellen von Verbundsicherheitsglas ist, dass die Temperierungseinheit zur individuellen, insbesondere übereinstimmenden Temperierung der zu verbindenden Glasscheiben ausgebildet ist. Mittels der erfindungsgemäßen Temperierungseinheit besteht somit die Möglichkeit, die Temperatur der zu verbindenden Glasscheiben, d. h. der mindestens einen Vakuumglasscheibe und einer weiteren Glasscheibe, bei der es sich bspw. um eine Flachglasscheibe oder eine Einscheibensicherheitsglasscheibe oder eine weitere Vakuumglasscheibe handeln kann, während des Herstellungsprozesses, einzeln in Abhängigkeit der erforderlichen Prozessparameter zur Verbindung der Glasscheiben einzustellen. Insbesondere besteht die Möglichkeit, die mindestens beiden Glasscheiben in übereinstimmender Weise auf die für die Verbindung erforderliche Prozesstemperatur zu erwärmen. Unter einer übereinstimmenden Temperierung wird dabei im Rahmen der Anmeldung eine Temperatureinstellung der zu verbindenden Glasscheiben verstanden, bei der deren Kerntemperatur während des Herstellungsprozesses um nicht mehr als 15°C, bevorzugt nicht mehr als 10°C voneinander abweichen.

Die gezielte Steuerung der Temperatur der zu verbindenden Glasscheiben mittels der Temperierungseinheit erlaubt es mittels der erfindungsgemäßen Vorrichtung mindestens eine Glasscheibe spannungsfrei auf die Vakuumglasscheibe zu laminieren, sodass dadurch eine fehlerfreie Verbundsicherheitsglasscheibe hergestellt wird.

Insgesamt erlaubt die erfindungsgemäße Vorrichtung durch eine gezielte Steuerung des Unterdrucks im Hohlraum zwischen dem Hüllmaterial und der Grundplatte sowie des Überdrucks in dem Arbeitsraum zwischen der Abdeckplatte und dem Hüllmaterial in Verbindung mit der Temperaturführung der zu verbindenden Glasscheiben eine zuverlässige Herstellung von Verbundsicherheitsglas unter Verwendung einer Vakuumglasscheibe. Dies ermöglicht bspw. die Herstellung von Verbundsicherheitsglas, welches im Baubereich als absturz- und durchbruchshemmende Fassadenelemente verwendet werden kann, sodass die Verwendung aufwendiger und extrem schwerer Isolierverglasungen überflüssig ist.

Die Möglichkeit zur Verlagerung der Grundplatte relativ zur Abdeckplatte zwischen der Betriebsposition und der Entnahmeposition ermöglicht es dem Bediener in der Entnahmeposition, in der die Grundplatte von mindestens einer Seite, vorzugweise von drei Seiten frei zugänglich ist, einen Vorverbund, gebildet aus einer Vakuumglasscheibe und einer weiteren Glasscheibe mit einer zwischen den Glasscheiben angeordneten Klebeschicht, vorzugweise einer PVB-Folie, in komfortabler Weise auf der Grundplatte zu positionieren. Gleichzeitig bietet die Entnahmeposition dem Bediener ferner die Möglichkeit, das in der Vorrichtung hergestellte Verbundsicherheitsglas nach Beendigung des Herstellungsprozesses im Wesentlichen ungehindert aus der Vorrichtung zu entnehmen.

In der Betriebsposition der Vorrichtung bildet die Grundplatte mit der Abdeckplatte in Verbindung mit einem zwischen den Platten druckdicht angeordneten und diese beabstandeten Dichtungsrahmen einen luft- bzw. druckdicht abgeschlossenen Arbeitsraum. Zur Verstellung der Vorrichtung zwischen der Entnahmeposition und der Betriebsposition sind die Grundplatte und die Abdeckplatte insbesondere aufeinander zu bewegbar.

Mit den Mitteln der erfindungsgemäßen Vorrichtung zum Herstellen eines Unterdrucks sowie Mitteln zur Erzeugung eines Überdrucks, jeweils in der Betriebsposition, wird in dem zwischen der Grundplatte und einem den Vorverbund überdeckenden Hüllmaterial gebildeten Hohlraum ein Unterdruck und in dem Arbeitsraum zwischen der Abdeckplatte und dem auf den Glasscheiben angeordneten Hüllmaterial ein über dem Atmosphärendruck liegender Luftdruck erzeugt. Aufgrund der vorzugsweisen flexiblen Ausgestaltung des Hüllmaterials und unterstützt durch den Unterdruck im Hohlraum wirkt der Überdruck im Arbeitsraum gleichmäßig auf den Vorverbund und presst die Glasscheiben aneinander.

Für die Herstellung des Verbundsicherheitsglases ist neben der Anpressung der Glasscheiben aneinander die Einstellung einer von der verwendeten Klebeschicht abhängigen Prozesstemperatur erforderlich. In der Betriebsposition dient hierzu die Temperierungseinheit, die vor, während und/oder nach der Erzeugung des Unterdrucks im Hohlraum und Überdrucks im Arbeitsraum die einzelnen Glasscheiben individuell, insbesondere übereinstimmend auf die erforderliche Prozesstemperatur erhitzt und diese Temperatur über einen festgelegten Zeitraum aufrechterhält.

Die erfindungsgemäße Vorrichtung zeichnet sich dabei neben dem einfachen Aufbau insbesondere durch die Temperierungseinheit aus, welche es aufgrund ihrer Eignung zur individuellen, insbesondere übereinstimmenden Temperierung der zu verbindenden Glasscheiben ermöglicht, eine Glasscheibe spannungsfrei auf eine Vakuumglasscheibe zu laminieren, was die Herstellung von Verbundsicherheitsglas unter Verwendung mindestens einer Vakuumglasscheibe und somit die Herstellung von einem Verbundsicherheitsglas mit den Eigenschaften einer Vakuumglasscheibe ermöglicht.

Die vorzugweise Verwendung eines flexiblen Hüllmaterials sowie die Möglichkeit der Verwendung von Dichtungsrahmen mit variablen, an die Größe des Vorverbunds angepassten Abmessungen, ermöglicht eine besonders einfache und effiziente Herstellung unterschiedlicher Verbundglasscheiben.

Die Temperierungseinheit ist neben der individuellen, insbesondere übereinstimmenden Temperierung der zu verbindenden Glasscheiben dazu ausgebildet, die von der verwendeten Klebeschicht abhängige Prozesstemperatur einzustellen und über einen festgelegten Zeitraum zu halten. Nach einer Weiterbildung der Erfindung ist ferner vorgesehen, dass die Temperierungseinheit zur individuellen, insbesondere übereinstimmenden Erwärmung und Abkühlung der Glasscheiben ausgebildet ist. Gemäß dieser Ausgestaltung der Erfindung ist die Temperierungseinheit nicht nur dazu geeignet, während des Aufheizprozesses und des Heizvorgangs eine individuelle, insbesondere übereinstimmende Temperierung der zu verbindenden Glasscheiben zu gewährleisten, sondern ferner dazu geeignet, auch eine kontrollierte Abkühlung der Glasscheiben herbeizuführen, bei der ebenfalls die Temperatur der Glasscheiben individuell festgelegt, insbesondere übereinstimmend ist. Durch diese Weiterbildung der Erfindung wird gewährleistet, dass es auch während des Abkühlprozesses nicht zu einer Zerstörung der Verbundsicherheitsglasscheibe kommt, welche aus Temperaturdifferenzen zwischen der Vakuumglasscheibe und der weiteren Glasscheibe während des Abkühlprozesses resultiert. Die Weiterbildung der Temperierungseinheit ermöglicht es somit in besonders zuverlässiger Weise, Verbundglasscheiben unter Verwendung von Vakuumglasscheiben herzustellen.

Die Ausgestaltung der Temperierungseinheit zur individuellen, insbesondere übereinstimmenden Temperierung der zu verbindenden Glasscheiben, ist grundsätzlich frei wählbar. Nach einer besonders vorteilhaften Ausgestaltung der Erfindung ist jedoch vorgesehen, dass die Temperierungseinheit zur
- Erwärmung oder
- Erwärmung und Abkühlung
der Grundplatte und/oder der Abdeckplatte ausgebildet ist.

Gemäß dieser Ausgestaltung der Erfindung ist die Temperierungseinheit dazu geeignet, die Abdeckplatte und die Grundplatte zu erwärmen oder zu erwärmen und abzukühlen. Hierzu kann die Temperierungseinheit bspw. mäanderförmig an oder in der Abdeck- und/oder Grundplatte verlaufende elektrische Heizleitungen aufweisen, welche eine oder beide Platten aufheizen. Auch kann die Temperierungseinheit in der Grund- und/oder Abdeckplatte verlaufende Rohrleitungen aufweisen. Diese Rohrleitungen dienen dabei zur Aufnahme bzw. Durchleitung eines fluiden Mediums, wie bspw. Wasser, welches durch die Rohrleitungen geleitet wird. Die Verwendung von Rohrleitungen zeichnet sich dabei dadurch aus, dass durch die Strömungsgeschwindigkeit des durchzuleitenden fluiden Mediums der Wärmeübergang variiert werden kann. Zum schnelleren Wärmeübergang ist bspw. die Wassermenge äußerst gering gehalten, um höhere Strömungsgeschwindigkeiten zu erreichen. Darüber hinaus lassen sich die Rohrleitungen in der Abdeck- und/oder Grundplatte ferner zur beschleunigten bzw. kontrollierten Abkühlung im Anschluss an den Herstellungsprozess verwenden, wobei dann das heiße, fluide Medium durch ein kaltes, bspw. Wasser, ersetzt wird. Eine kontrollierte Verkürzung der Abkühlphase steigert dabei die Rentabilität in ergänzender Weise. Die Aufheizung bzw. Aufheizung und Abkühlung der Grundplatte und/oder Abdeckplatte erfolgt dabei über die Temperierungseinheit in der Art und Weise, dass die zu verbindenden Glasscheiben besonders bevorzugt übereinstimmend, d. h., mit einer Temperaturdifferenz von bevorzugt weniger als 15°C, besonders bevorzugt weniger als 10°C erwärmt bzw. abgekühlt werden.

Erfindungsgemäß weist die Vorrichtung neben der Temperierungseinheit ferner Mittel zum Herstellen eines Unterdrucks im Hohlraum sowie eines Überdrucks im Arbeitsraum auf. Die Herstellung des Unterdrucks im Hohlraum sowie Überdrucks im Arbeitsraum kann dabei grundsätzlich in beliebiger Weise erfolgen. In der Betriebsposition besteht bspw. die Möglichkeit, den Hohlraum durch bspw. in die Arbeitsplatte eingelassene Unterdruckleitungen zu evakuieren und somit in dem Hohlraum einen Unterdruck herzustellen. Im Falle der vorteilhafterweise vorgesehenen Verwendung eines flexiblen Hüllmaterials, insbesondere einer Silikonkautschukmatte, besteht ferner die Möglichkeit, an diese mindestens eine Leitung druckdicht anzuschließen, die anderenends zur Erzeugung des Unterdrucks mit einer vorteilhafterweise vorgesehenen Vakuumeinheit verbunden werden kann. Mittel zur Erzeugung eines Überdrucks können bspw. durch in den Arbeitsraum hineinreichende Druckleitungen gebildet werden.

Das Herausführen der Anschlussleitungen aus der Vorrichtung kann grundsätzlich in beliebiger Weise erfolgen, wobei bspw. außenseitig an der Abdeckplatte und/oder Grundplatte angeordnete Anschlüsse denkbar sind. Nach einer besonders vorteilhaften Ausgestaltung der Erfindung weist jedoch der Dichtungsrahmen
- Leitungsdurchführungen zum Anschluss von Leitungen einer Vakuum- und/oder Druckeinheit und/oder
- Durchgangsöffnungen zum Anschluss an ein druck- und temperaturstabiles Gebläse der Temperierungseinheit
auf.

Gemäß dieser Ausführungsform der Erfindung sind in der Betriebsposition außenseitig am Dichtungsrahmen Anschlüsse angeordnet, welche innerhalb der Vorrichtung in den Arbeitsraum und/oder Hohlraum führen. Die Anordnung der Leitungsdurchführung in den Dichtungsrahmen zeichnet sich dabei insbesondere dadurch aus, dass diese in der Betriebsposition von außen gut zugänglich sind und so den Anschluss der vorzugsweise vorzusehenden Vakuum- und/oder Druckeinheiten in komfortabler Weise ermöglichen. Denkbar ist auch die Kombination der Vakuum- und/oder Druckeinheit in einer Pumpeneinheit, welche in Abhängigkeit von dem einzustellenden Betriebszustand in bekannter Weise geschaltet werden kann.

Die Nutzung des Dichtungsrahmens zum ergänzenden oder alternativen Anschluss an ein druck- und temperaturstabiles Gebläse der Temperierungseinheit über Durchgangsöffnungen im Dichtungsrahmen, stellt eine besonders vorteilhafte Ausgestaltung der Temperierungseinheit dar, um die an das Hüllmaterial angrenzende Glasscheibe, in der Regel die auf die mindestens eine Vakuumglasscheibe aufzulaminierende Glasscheibe, in vorgegebener Weise zu temperieren, insbesondere in der Weise, dass diese eine mit der auf der Grundplatte angeordneten Vakuumglasscheibe übereinstimmende Temperatur aufweist. Die Verwendung eines druck- und temperaturstabilen Gebläses ermöglicht es dabei unter Aufrechterhaltung des erforderlichen Drucks im Arbeitsraum, die für die Temperierung der an den Arbeitsraum angrenzenden Glasscheibe erforderliche Temperatur einzustellen. Der Dichtungsrahmen weist dabei Durchgangsöffnungen auf, an denen Rohr- oder Schlauchleitungen angebracht werden, welche saug- bzw. druckseitig mit dem Gebläse verbunden werden können. Das druck- und temperaturstabile Gebläse ist dabei mit einem entsprechenden Wärmetauscher verbunden, welcher den benötigten, durch den Arbeitsraum geführten Luftstrom in gezielter Weise aufheizen bzw. aufheizen und abkühlen kann. Durch diese Ausgestaltung der Erfindung wird der Arbeitsraum zu einem funktionalen Prozessraum für den thermodynamischen sowie überdrucktechnischen Einfluss auf die an den Arbeitsraum angrenzende Glasscheibe.

Der erfindungsgemäß vorgesehene Dichtungsrahmen erfüllt in erster Linie die Funktion zur Herstellung eines luftdichten Arbeitsraums im Bereich zwischen der Grundplatte und der Arbeitsplatte. Zusätzlich kann er im Falle der Verwendung eines flexiblen Hüllmaterials dazu genutzt werden, um dieses umlaufend auf die Abdeckplatte anzupressen, um so ebenfalls besonders zuverlässig einen luftdichten Hohlraum zwischen dem Hüllmaterial und der Grundplatte zu bilden. Dabei dient das Hüllmaterial zudem als den Arbeitsraum gegenüber der Umgebung abdichtendes Dichtelement.

Der Dichtungsrahmen kann grundsätzlich beliebig ausgebildet sein, sofern er nicht die Abmessung der Grund- und Abdeckplatte überschreitet. So besteht die Möglichkeit der Verwendung unterschiedlicher Dichtungsrahmen in Abhängigkeit von der Größe der herzustellenden Verbundsicherheitsgläser, wobei die Dichtungsrahmen von Fall zu Fall lediglich in die Vorrichtung eingelegt werden. Alternativ ist auch die einstückige Ausbildung der Grundplatte oder Abdeckplatte mit dem Dichtungsrahmen möglich, wobei dann der Dichtungsrahmen nach Art eines umlaufenden Steges von einer der Platten, vorzugsweise der Abdeckplatte, vorsteht.

Nach einer besonders vorteilhaften Ausgestaltung der Erfindung ist der Dichtungsrahmen jedoch lösbar mit der Grund- oder der Abdeckplatte verbunden. Die lösbare Verbindbarkeit kombiniert die Vorteile eines einstückig mit der Grund- oder Abdeckplatte verbundenen Dichtungsrahmens mit den Vorteilen der Verwendung von Dichtungsrahmen mit variabler Größe. Die lösbare Verbindbarkeit gewährleistet dabei ferner, dass der eingesetzte Rahmen positionsgenau in der Vorrichtung angeordnet und arretiert ist. Die Verwendung von in der Größe an die herzustellenden Verbundsicherheitsgläser angepasster Dichtungsrahmen ermöglicht die Bildung solcher Hohl- bzw. Arbeitsräume, in denen besonders kurzfristig die erforderlichen Prozessbedingungen wie Druck- und Temperatur hergestellt werden können.

Zur erfindungsgemäßen individuellen, insbesondere übereinstimmenden Temperierung der zu verbindenden Glasscheiben weist die Temperierungseinheit besonders bevorzugt eine Steuerungseinheit zur Einstellung der Temperatur der Glasscheiben auf. Die Steuerungseinheit gewährleistet dabei in Abhängigkeit von den zu verbindenden Glasscheiben eine entsprechende Temperaturführung der vorzugsweise temperierten Grundplatte und des vorzugsweise temperierten Arbeitsraums über die die Glasscheiben entsprechend erwärmt bzw. erwärmt und abgekühlt werden. In der Steuereinheit lassen sich bspw. für unterschiedliche Glasscheiben entsprechende Temperaturkurven hinterlegen, welche zur Herstellung eines stabilen Verbundsicherheitsglases unter Verwendung einer Vakuumglasscheibe über die Prozesszeit aufrechterhalten werden müssen.

Nach einer besonders vorteilhaften Weiterbildung der Erfindung ist ferner vorgesehen, dass die Temperierungseinheit eine Sensoreinheit zur Erfassung der Temperatur der Glasscheiben aufweist. Die Verwendung einer Sensoreinheit, welche besonders bevorzugt mit der Steuerungseinheit verbunden ist, ermöglicht es darüber hinaus, die Temperatur der zu verbindenden Glasscheiben zu überwachen und ggf. über die Steuerungseinheit Änderungen an der Temperierung vorzunehmen.

Die relative Verstellbarkeit der Grundplatte gegenüber der Abdeckplatte kann in beliebiger Weise ausgestaltet sein. Besonders vorteilhafter Weise ist jedoch die Grundplatte längsverschiebbar und in Richtung auf die Abdeckplatte verstellbar. Diese Ausgestaltung der Erfindung ermöglicht durch die Längsverschiebbarkeit, wobei die Grundplatte bspw. auf Schienen aus der Vorrichtung herausgezogen werden kann, eine einfache Zugänglichkeit der Grundplatte und somit eine einfache Anordnung des Vorverbunds sowie Entnahme des hergestellten Verbundsicherheitsglases nach Abschluss des Prozesses. Nach der Anordnung des Vorverbunds kann die Grundplatte bspw. nach Art einer Schublade in die Vorrichtung hineingeschoben werden, wo diese anschließend in Richtung auf die Abdeckplatte verstellt wird, um so den abgeschlossenen Arbeitsraum zu bilden.

Die Mittel zur Erzeugung der Verstellung der Grundplatte in Richtung auf die Abdeckplatte können dabei sowohl mechanisch als auch hydraulisch ausgebildet sein. Besonders vorteilhafterweise werden die Mittel jedoch durch pneumatische Balgzylinder gebildet, durch die die Grundplatte in Richtung auf die Abdeckplatte verstellbar ist. Die Verwendung pneumatischer Balgzylinder zeichnet sich dabei dadurch aus, dass diese die Grundplatte besonders gleichmäßig in Richtung auf die Abdeckplatte verstellen, sodass mit besonders hoher Zuverlässigkeit die Bildung eines Arbeitsraums gewährleistet ist, welcher gegenüber der Umgebung abgedichtet ist.

Darüber hinaus ermöglicht die Verwendung pneumatischer Balgzylinder eine einfache Erweiterbarkeit bzw. Anpassbarkeit der Vorrichtung nach Kundenvorgaben. Zur Erweiterung der Anlage ist zur Anpassung an veränderte Plattengrößen lediglich eine Erhöhung der Anzahl der Balgzylinder erforderlich, wobei eine Anpassung bzw. Herstellung der Vorrichtung in beliebigen Längen und Breiten in einfacher Weise möglich ist.

Ebenfalls besonders vorteilhaft für die Möglichkeit der Erweiterung bzw. Herstellung der erfindungsgemäßen Vorrichtung in beliebigen Abmessungen ist die nach einer vorteilhaften Weiterbildung vorgesehene Ausgestaltung, wonach die Grund- und die Abdeckplatte in der Betriebsposition innerhalb eines durch mindestens zwei ringförmige Träger gebildeten Rahmens angeordnet sind, wobei die Träger besonders bevorzugt einen T-förmigen Querschnitt aufweisen.

Über die Anzahl der ringförmigen Träger, die hintereinander angeordnet einen Innenraum zur Aufnahme der Abdeck- und Grundplatte bilden, lässt sich die Länge der Vorrichtung in beliebiger Weise einstellen. Darüber hinaus weisen die Träger den Vorteil auf, dass aufgrund der Positionierung der Abdeckplatte und Grundplatte in der Betriebsposition innerhalb der umlaufenden Träger sämtliche Prozesskräfte durch die Träger aufgenommen werden.

Im Falle der Verwendung der ringförmigen Träger in Verbindung mit den pneumatischen Balgzylindern sind diese ebenfalls innerhalb des durch die ringförmigen Träger gebildeten Innenraums angeordnet, wodurch in ergänzender Weise gewährleistet wird, dass keine Druckkräfte nach außen geleitet werden.

Das erfindungsgemäße Verfahren zur Herstellung von Verbundsicherheitsglas aus mindestens einer Vakuumglasscheibe und einer weiteren Glasscheibe mit einer zwischen den Glasscheiben angeordneten Klebeschicht, wobei das Verfahren insbesondere unter Verwendung einer vorstehend beschriebenen erfindungsgemäßen oder weitergebildeten Vorrichtung durchgeführt wird, weist die folgenden Schritte auf:
- Anordnen der Glasscheiben mit einer zwischen den Glasscheiben angeordneten Klebeschicht, bevorzugt einer PVB-Folie, auf einer Grundplatte,
- Überdecken der Glasscheiben mit einem Hüllmaterial und Herstellung eines abgedichteten, durch den Dichtungsrahmen begrenzten Arbeitsraums zwischen dem Hüllmaterial und einer Abdeckplatte durch Verlagerung der Grundplatte relativ zur Abdeckplatte in eine Betriebsposition,
- Erzeugen eines Unterdrucks in einem Hohlraum zwischen der Grundplatte und dem Hüllmaterial,
- Erzeugen eines Überdrucks in dem Arbeitsraum,
- Aufheizen der Grundplatte und des Arbeitsraums derart, dass sich die zu verbindenden Glasscheiben übereinstimmend bis auf eine Glaskerntemperatur von mehr als 120°C erwärmen,
- Abkühlen der Grundplatte und des Arbeitsraums derart, dass sich die zu verbindenden Glasscheiben übereinstimmend bis auf eine Glaskerntemperatur von weniger als 90°C abkühlen,
- Beenden der Druck- und Temperaturbeeinflussung der zu verbindenden Glasscheiben.

Gemäß dem erfindungsgemäßen Verfahren werden die zu einem Vorverbund zusammengelegten Glasscheiben, d. h. die mindestens eine Vakuumglasscheibe und mindestens eine weitere Glasscheibe, bspw. eine Flachglasscheibe, auf der Grundplatte angeordnet, wobei zwischen den Glasscheiben eine Klebeschicht, bevorzugt eine PVB-Folie platziert wird.

Hieran anschließend wird der Glasvorverbund mit einem Hüllmaterial überdeckt, bei der es sich bspw. um eine Silikonmembran handelt, welche auch einen Hohlraum zwischen dem Hüllmaterial und der Grundplatte gegenüber der Umgebung luftdicht abschließt.

Im Anschluss hieran wird die Grundplatte unter Zwischenlage eines den Glasverbund umgebenden Dichtungsrahmens durch die relative Verlagerung der Abdeckplatte gegenüber der Grundplatte in eine Betriebsposition verstellt, in der der umlaufende Dichtungsrahmen an dem Hüllmaterial und der Abdeckplatte anliegt und so zwischen dem Hüllmaterial und der Abdeckplatte ein abgegrenzter Arbeitsraum geschaffen wird. Hieran anschließend wird über eine geeignete Vakuumvorrichtung in dem Hohlraum ein Unterdruck erzeugt, um den Vorverbund aus zumindest zwei Glasscheiben zu entlüften. In der Folge wird oberhalb des Hüllmaterials, bevorzugt der Silikonmatte, innerhalb des Arbeitsraums ein Überdruck erzeugt.

Anschließend oder gleichzeitig mit der Erzeugung des Unterdrucks in dem Hohlraum und des Überdrucks in dem Arbeitsraum wird die Grundplatte und der Arbeitsraum derart aufgeheizt, dass sich die zu verbindenden Glasscheiben übereinstimmend bis auf eine Glaskerntemperatur von mehr als 120°C erwärmen, wobei unter einer übereinstimmenden Erwärmung verstanden wird, dass deren Glaskerntemperatur während des gesamten Arbeitsprozesses um nicht mehr als 15°C, bevorzugt nicht mehr als 10°C voneinander abweicht.

Nach Erreichen der Glaskerntemperatur von mehr als 120°C schließt sich die Abkühlphase an, wobei diese dadurch erzeugt wird, dass die Grundplatte und der Arbeitsraum derart abgekühlt werden, dass sich die zu verbindenden Glasscheiben übereinstimmend bis auf eine Glaskerntemperatur von weniger als 90°C abkühlen. Hieran anschließend wird die Druck- und Temperaturbeeinflussung der zu verbindenden Glasscheiben beendet und die Vorrichtung kann geöffnet und die hergestellte Verbundscheibe entnommen werden bzw. auf der Grundplatte weiter abkühlen.

Das erfindungsgemäße Verfahren zeichnet sich dadurch aus, dass dieses die Herstellung von Verbundsicherheitsglas unter Verwendung mindestens einer Vakuumglasscheibe ermöglicht. Somit bietet das erfindungsgemäße Verfahren die Möglichkeit, Verbundsicherheitsglas mit den Isolierungseigenschaften von Vakuumglas herzustellen.

Nach einer vorteilhaften Weiterbildung des erfindungsgemäßen Verfahrens ist vorgesehen, dass in dem Hohlraum zwischen der Grundplatte und dem Hüllmaterial für mehr als 20 Minuten, bevorzugt mehr als 25 Minuten, besonders bevorzugt für ca. 30 Minuten ein Unterdruck von weniger als 0,9 bar erzeugt wird, bevor in dem Arbeitsraum ein Überdruck erzeugt wird. Diese Ausgestaltung der Erfindung gewährleistet in besonders zuverlässiger Weise eine Entlüftung des Glasverbunds und somit eine blasenfreie Verbindung zwischen der Vakuumglasscheibe und der mindestens einen weiteren Glasscheibe.

Nach einer weiteren Ausgestaltung der Erfindung ist ferner vorgesehen, dass in dem Hohlraum zwischen der Grundplatte und dem Hüllmaterial ein Unterdruck von weniger als 0,2 bar erzeugt wird, nachdem in dem Arbeitsraum ein Überdruck erzeugt wird. Gemäß dieser Ausgestaltung wird der Unterdruck erhöht, d. h. der Druck verringert, während in dem Arbeitsraum ein Überdruck erzeugt wird, was die Qualität des herzustellenden Verbundsicherheitsglases in ergänzender Weise steigert.

Besonders vorteilhafter Weise ist dabei vorgesehen, dass in dem Arbeitsraum ein Überdruck von 1,1 bis 2 bar, bevorzugt 1,3 bis 1,7 bar erzeugt wird, was die Qualität des Verbundsicherheitsglases in ergänzender Weise erhöht.

Zur Temperierung des Arbeitsraums sowie der Grundplatte zur Aufheizung und ggf. Abkühlung der jeweils angrenzenden Glasscheiben ist nach einer Weiterbildung des erfindungsgemäßen Verfahrens vorgesehen, dass der Arbeitsraum über ein mit dem Arbeitsraum strömungstechnisch verbundenes Gebläse einer Temperierungseinheit und die Grundplatte über mit der Grundplatte verbundene Heizleitung derart erwärmt werden, dass die Glasscheiben übereinstimmend auf eine Glaskerntemperatur von mehr als 120°C, bevorzugt mehr als 130°C, besonders bevorzugt auf etwa 135°C erwärmt werden. Eine Temperierung des Arbeitsraums über ein entsprechend ausgebildetes Gebläse der Temperierungseinheit sowie eine Temperierung der Grundplatte über entsprechende Heizleitungen der Temperierungseinheit ermöglichen es in exakter Weise, die Glaskerntemperatur der zu verbindenden Glasscheiben einzustellen. Eine Glaskerntemperatur von mehr als 120°C, bevorzugt mehr als 130°C, besonders bevorzugt mehr als 135°C gewährleistet dabei eine gute Verbindung der Glasscheiben über die Klebeschicht, bevorzugt die verwendete PVB-Folie.

Nach einer Weiterbildung des erfindungsgemäßen Verfahrens ist ferner vorgesehen, dass die Glasscheiben nach Erreichen der Glaskerntemperatur über das Gebläse der Temperierungseinheit und die Heizleitungen übereinstimmend auf weniger als 85°C, bevorzugt etwa 80°C abgekühlt werden. Eine Verwendung der Temperierungseinheit auch während des Abkühlprozesses nach Erreichen der erforderlichen Glaskerntemperatur gewährleistet eine übereinstimmende Abkühlung der Glasscheiben während des Abkühlprozesses und verhindert somit Spannungsrisse im Rahmen des Abkühlprozesses. Ab Erreichen einer Glaskerntemperatur von 85°C, bevorzugt etwa 80°C kann dann die Temperaturbeeinflussung eingestellt werden, nachdem dann keine Spannungsrisse mehr befürchtet werden müssen.

Ein Ausführungsbeispiel der Erfindung wird nachstehend mit Bezug auf die Zeichnungen erläutert. In den Zeichnungen zeigen:
- Fig.1: eine perspektivische Ansicht einer Vorrichtung zum Herstellen von Verbundsicherheitsglas in einer Entnahmeposition;
- Fig.2: in einer perspektivischen Ansicht eine erste Ausführungsform eines Glasscheibenverbunds und
- Fig.3: in einer perspektivischen Ansicht eine zweite Ausführungsform eines Glasscheibenverbunds.

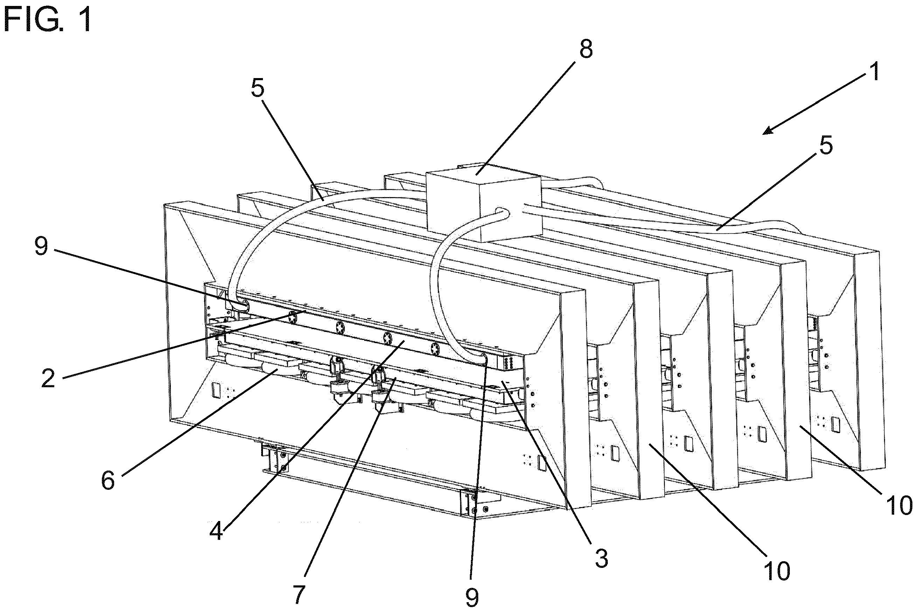

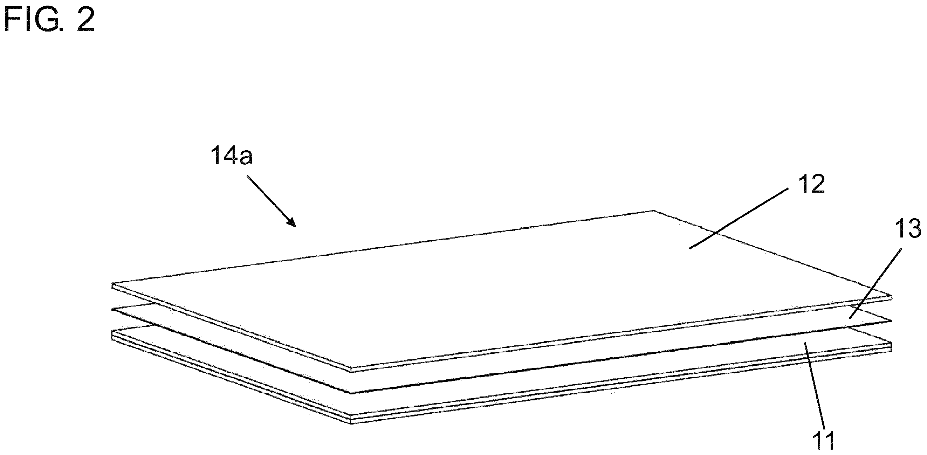

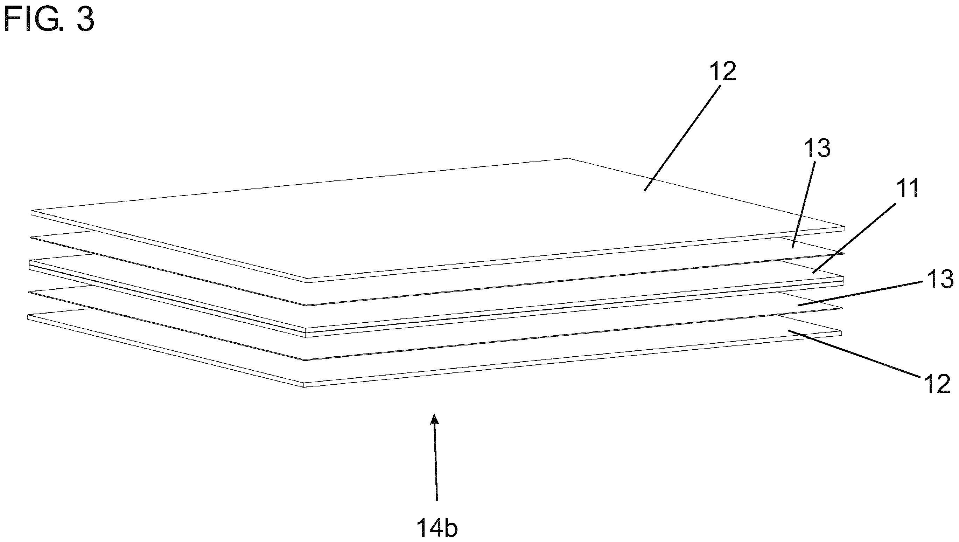

Die in Fig. 1 in einer perspektivischen Ansicht dargestellte Vorrichtung 1 zur Herstellung von Verbundsicherheitsglas weist eine Grundplatte 3 sowie eine relativ gegenüber dieser verstellbare Abdeckplatte 2 auf. Die Grundplatte 3 dient zur Aufnahme eines Glasvorverbunds 14a, 14b, welche exemplarisch in den Figuren 2 und 3 dargestellt sind.

Der Vorverbund 14a weist dabei eine Vakuumglasscheibe 11 sowie eine Flachglasscheibe 12 auf, zwischen den eine als Kleber fundierende PVB-Folie 13 angeordnet ist. Alternativ zu diesem in Fig. 2 dargestellten Aufbau kann der Glasverbund 14b auch wie in Fig. 3 dargestellt, beidseitig der Vakuumglasscheibe 11 angeordnete Flachglasscheiben 12 aufweisen, wobei zwischen der Vakuumglasscheibe 11 und den Flachglasscheiben 12 jeweils eine PVB-Folie 13 angeordnet ist.

Die Grundplatte 3 dient zur Aufnahme des Vorverbunds 14a, 14b, der innerhalb der Vorrichtung 1 zu einem Verbundsicherheitsglas laminiert wird. In der in Fig. 1 dargestellten Position befindet sich die Grundplatte 3 in einer gegenüber der Abdeckplatte 2 abgesenkten Position, wobei an der Abdeckplatte 2 umlaufend ein in Richtung auf die Grundplatte 3 vorstehender Dichtungsrahmen 4 angeordnet ist. In der hier nicht dargestellten Betriebsposition, in der die Grundplatte 3 an dem Dichtungsrahmen 4 anliegt, grenzt der Dichtungsrahmen 4 einen Arbeitsraum zwischen einer hier nicht dargestellten, den Glasscheibenverbund 14a, 14b auf der Grundplatte 3 überdeckten flexiblen Silikonmatte und der Abdeckplatte 2 umlaufend ab. Dieser Arbeitsraum ist über Leitungsanschlüsse 9 an dem Dichtungsrahmen 4 mit einem Heizgebläse 8 verbunden, wobei über Schlauchleitungen 5 der Arbeitsraum derart temperiert werden kann, dass die dem Arbeitsraum zugewandte Glasscheibe, üblicherweise die Flachglasscheibe 12, erwärmt wird.

Eine Erwärmung der auf der Grundplatte 3 angeordneten Glasscheibe, üblicherweise der Vakuumglasscheibe 11, erfolgt über eine Erwärmung der Grundplatte 3, welche auf einem Grundplattenträger 7 angeordnet ist, der über Balgzylinder 6 in Richtung auf die Abdeckplatte 12 verstellbar ist.

Die Grundplatte 3 erstreckt sich durch Öffnungen von ringförmigen Trägern 10, welche hintereinander angeordnet sind und innerhalb derer die Balgzylinder 6 die Grundplatte 3 relativ zur Abdeckplatte 2 zwischen der Betriebsposition und der Entnahmeposition verstellen.

Zur Herstellung von Verbundsicherheitsglas wird gemäß einem Ausführungsbeispiel des Verfahrens bspw. eine aus zwei 4 mm starken Flachglasscheiben mit einem Zwischenraum von ca. 0,3 mm hergestellte Vakuumglasscheibe mit einer Flachglasscheibe 12 mit einer Stärke von 4 mm verbunden. Hierzu werden die Vakuumglasscheibe 11 und die Flachglasscheibe 12 unter Anordnung einer PVB-Folie 13 zwischen den beiden Glasscheiben 11, 12 auf der als heizbare Platte ausgebildeten Grundplatte 3 angeordnet. Hiernach wird eine Silikonmembran den Glasscheibenverbund 14a überdeckend ganzflächig als Vakuumsperre auf der Grundplatte 3 angeordnet. Anschließend wird die Grundplatte 3 in die Vorrichtung 1 hineingeschoben und mittels der Balgzylinder 6 relativ zur Abdeckplatte 2 verstellt, sodass der Dichtungsrahmen 4 umlaufend um den Glasscheibenverbund 14a gegen die Grundplatte 3 drückt.

Ein an die Grundplatte 3 angeschlossener Vakuumschlauch versorgt jetzt für ca. 30 Minuten den Hohlraum zwischen der Silikonmatte und der Grundplatte 3 mit Unterdruck von ca. 0,9 bar (Kaltvakuum) um den Glasscheibenverbund 14a zu entlüften. Danach wird in dem Arbeitsraum zwischen der Abdeckplatte 2 und der Silikonmatte ein Überdruck von ca. 1 bis 1,5 bar erzeugt, wobei gleichzeitig das Kaltvakuum im Hohlraum bis auf ca. 0,2 bar zurückgeregelt wird. Gleichzeitig wird das Heizgebläse 8, vorzugsweise ein Drehkolbengebläse, aktiviert, um einen stabilen Luftstrom aufzubauen.

Hieran anschließend wird die Grundplatte 3 erhitzt, um die Glasscheiben 11, 12 von Raumtemperatur auf die erforderlichen 145°C, was einer Glaskerntemperatur von ca. 135°C entspricht, aufzuheizen. Gleichzeitig wird das Heizgebläse mit Energie versehen, um den durch den Arbeitsraum zirkulierenden Luftstrom um die gleiche Temperatur zu erhöhen, wie die Grundplatte 3. Diese gleichzeitige Aufheizung und spätere Abkühlung zwischen der Oberseite des Glasscheibenverbunds 14a und der Unterseite erfolgt derart, dass zwischen diesen keine größere Temperaturdifferenz als 10°C besteht, was ansonsten zu Spannungsrissen bei der Herstellung des Verbundsicherheitsglases führen könnte.

Nach Erreichen einer Glaskerntemperatur von ca. 135°C wird der Aufheizvorgang beendet und die Abkühlphase eingeleitet, wobei auch im Rahmen der Abkühlphase über eine entsprechende Temperierung der Grundplatte 3 und des Arbeitsraums verhindert wird, dass eine Temperaturdifferenz von mehr als 10°C zwischen den Glasscheiben 11, 12 herrscht. Bei einer Glaskerntemperatur von ca. 80°C wird der Prozess beendet und die Vorrichtung 1 geöffnet, wobei diese aus der Betriebsposition in die Entnahmeposition verstellt wird.

### Bezugszeichenliste

- 1: Vorrichtung
- 2: Abdeckplatte
- 3: Grundplatte
- 4: Dichtungsrahmen
- 5: Leitungen
- 6: Balgzylinder
- 7: Grundplattenträger
- 8: Heizgebläse
- 9: Leitungsanschlüsse
- 10: Träger
- 11: Vakuumglasscheibe
- 12: Flachglasscheibe
- 13: Kleber (PVB-Folie)
- 14a, 14b: Glasscheibenverbund

## Patentansprüche

1. Vorrichtung zum Herstellen von Verbundsicherheitsglas aus mindestens einer Vakuumglasscheibe (11) und einer weiteren Glasscheibe (12) mit einer zwischen den Glasscheiben (11, 12) angeordneten Klebeschicht (13), mit
- einer Grundplatte (3) und einer Abdeckplatte (2), die relativ zueinander zwischen einer Betriebsposition und einer Entnahmeposition verstellbar sind,
- einem in der Betriebsposition an der Grundplatte (3) und der Abdeckplatte (2) druckdicht angeordneten Dichtungsrahmen (4),
- Mitteln zum Herstellen eines Unterdrucks in einem Hohlraum zwischen einem die Glasscheiben (11, 12) in der Betriebsposition überdeckenden Hüllmaterial und der Grundplatte (3),
- Mitteln zur Erzeugung eines Überdrucks in dem in der Betriebsposition zwischen der Abdeckplatte (2) und dem auf den Glasscheiben (11, 12) angeordneten Hüllmaterial gebildeten Arbeitsraum und
- einer Temperierungseinheit zum Erhitzen der zu verbindenden Glasscheiben (11, 12)
**dadurch gekennzeichnet, dass**
die Temperierungseinheit zur individuellen, insbesondere übereinstimmenden Temperierung der zu verbindenden Glasscheiben (11, 12) ausgebildet ist.

2. Vorrichtung nach Anspruch 1, **dadurch gekennzeichnet, dass** die Temperierungseinheit zur individuellen, insbesondere übereinstimmenden Erwärmung und Abkühlung der Glasscheiben (11, 12) ausgebildet ist.

3. Vorrichtung nach Anspruch 1 oder 2, **dadurch gekennzeichnet, dass** die Temperierungseinheit zur
- Erwärmung oder
- Erwärmung und Abkühlung
der Grundplatte (3) und/oder Abdeckplatte (2) ausgebildet ist.

4. Vorrichtung nach einem oder mehreren der vorhergehenden Ansprüche, **dadurch gekennzeichnet, dass** die Temperierungseinheit in die Grundplatte (3) und/oder Abdeckplatte (2) integrierte Leitungen aufweist.

5. Vorrichtung nach einem oder mehreren der vorhergehenden Ansprüche, **dadurch gekennzeichnet, dass** der Dichtungsrahmen (4) mit der Grundplatte (3) und/oder der Abdeckplatte (2) lösbar verbunden ist.

6. Vorrichtung nach einem oder mehreren der vorhergehenden Ansprüche, **dadurch gekennzeichnet, dass** der Dichtungsrahmen (4)
- Leitungsdurchführungen zum Anschluss von Leitungen einer Vakuum- und/oder Druckeinheit und/oder
- Durchgangsöffnungen (9) zum Anschluss an ein druck- und temperaturstabiles Gebläse (8) der Temperierungseinheit
aufweist.

7. Vorrichtung nach einem oder mehreren der vorhergehenden Ansprüche, **dadurch gekennzeichnet, dass** die Grundplatte (3) an den Hohlraum zwischen dem Hüllmaterial und der Grundplatte (3) angrenzende Öffnungen aufweist, die mit einem außenseitig an der Grundplatte (3) angeordneten Anschluss für eine Unterdruckquelle verbunden sind.

8. Vorrichtung nach einem oder mehreren der vorhergehenden Ansprüche, **dadurch gekennzeichnet, dass** die Temperierungseinheit eine Steuereinheit zur Steuerung der Temperatur der Glasscheiben (11, 12) aufweist.

9. Vorrichtung nach einem oder mehreren der vorhergehenden Ansprüche, **dadurch gekennzeichnet, dass** die Temperierungseinheit eine Sensoreinheit zur Erfassung der Temperatur der Glasscheiben (11, 12) aufweist.

10. Vorrichtung nach einem oder mehreren der vorhergehenden Ansprüche, **dadurch gekennzeichnet, dass** die Grundplatte (3) längsverschiebbar und in Richtung auf die Abdeckplatte (2) verstellbar ist.

11. Vorrichtung nach einem oder mehreren der vorhergehenden Ansprüche, **dadurch gekennzeichnet, dass** die Grundplatte (3) mittels pneumatischer Balgzylinder (6) in Richtung auf die Abdeckplatte (2) verstellbar ist.

12. Vorrichtung nach einem oder mehreren der vorhergehenden Ansprüche, **dadurch gekennzeichnet, dass** die Grundplatte (3) und die Abdeckplatte (2) in der Betriebsposition innerhalb eines durch mindestens zwei ringförmige Träger (10) gebildeten Rahmens angeordnet sind, wobei die Träger (10) bevorzugt einen T-förmigen Querschnitt aufweisen.

13. Verfahren zum Herstellen von Verbundsicherheitsglas aus mindestens einer Vakuumglasscheibe (11) und einer weiteren Glasscheibe (12) mit einer zwischen den Glasscheiben (11, 12) angeordneten Klebeschicht (13), insbesondere unter Verwendung einer Vorrichtung nach einem oder mehreren der Ansprüche 1 bis 12 mit den Schritten
- Anordnen der Glasscheiben (11, 12) mit einer zwischen den Glasscheiben (11, 12) angeordneten Klebeschicht (13) auf einer Grundplatte (3),
- Überdecken der Glasscheiben (11, 12) mit einem Hüllmaterial und Herstellen eines abgedichteten, durch einen Dichtungsrahmen (4) begrenzten Arbeitsraums zwischen dem Hüllmaterial und einer Abdeckplatte (2) durch Verlagerung der Grundplatte (3) relativ zur Abdeckplatte (2) in eine Betriebsposition,
- Erzeugen eines Unterdrucks in einem Hohlraum zwischen der Grundplatte (3) und dem Hüllmaterial,
- Erzeugen eines Überdrucks in dem Arbeitsraum,
- Aufheizen der Grundplatte (3) und des Arbeitsraums derart, dass sich die zu verbindenden Glasscheiben (11, 12) übereinstimmend bis auf eine Glaskerntemperatur von mehr als 120°C erwärmen,
- Abkühlen der Grundplatte (3) und des Arbeitsraums derart, dass sich die zu verbindenden Glasscheiben (11, 12) übereinstimmend bis auf eine Glaskerntemperatur von weniger als 90°C abkühlen,
- Beenden der Druck- und Temperaturbeeinflussung der zu verbindenden Glasscheiben (11, 12).

14. Verfahren nach Anspruch 13, **dadurch gekennzeichnet, dass** in dem Hohlraum zwischen der Grundplatte (3) und dem Hüllmaterial für mehr als 20 Minuten, bevorzugt mehr als 25 Minuten, besonders bevorzug für ca. 30 Minuten ein Unterdruck von weniger als 0,9 bar erzeugt wird, bevor in dem Arbeitsraum ein Überdruck erzeugt wird.

15. Verfahren nach Anspruch 13 oder 14, **dadurch gekennzeichnet, dass** in dem Hohlraum zwischen der Grundplatte (3) und dem Hüllmaterial ein Unterdruck von weniger als 0,2 bar erzeugt wird, nachdem in dem Arbeitsraum ein Überdruck erzeugt wird.

16. Verfahren nach einem oder mehreren der Ansprüche 13 bis 15, **dadurch gekennzeichnet, dass** in dem Arbeitsraum ein Überdruck von 1,1 bis 2,0 bar, bevorzugt 1,3 bis 1,7 bar erzeugt wird.

17. Verfahren nach einem oder mehreren der Ansprüche 13 bis 15, **dadurch gekennzeichnet, dass** der Arbeitsraum über ein mit dem Arbeitsraum strömungstechnisch verbundenes Gebläse (8) einer Temperierungseinheit und die Grundplatte (3) über mit der Grundplatte (3) verbundene Heizleitungen (5) derart erwärmt werden, dass die Glasscheiben (11, 12) übereinstimmend auf eine Glaskerntemperatur von mehr als 120°C, bevorzugt mehr als 130°C, besonders bevorzugt auf etwa 135°C erwärmt werden.

18. Verfahren nach einem oder mehreren der Ansprüche 13 bis 15, **dadurch gekennzeichnet, dass** die Glasscheiben (11, 12) nach dem Erreichen der Glaskerntemperatur über das Gebläse (8) der Temperierungseinheit und die Heizleitungen (5) übereinstimmend auf weniger als 85°C, bevorzug etwa 80°C abgekühlt werden.
